# EUROPEAN PATENT APPLICATION

(11) **EP 1 148 584 A2**
(43) Date of publication of application: **24.10.2001**
(21) Application number: 01303037.4
(22) Date of filing: 30.03.2001
(51) Int. Cl.: H01Q 21/24, H01Q 3/24, H01Q 9/04, H01Q 1/24, H04B 7/08

(54) **Radio communication apparatus and radio communication method**

(30) Priority: 30.03.2000 JP 2000097879
(71) Applicant: SONY CORPORATION, Tokyo (JP)
(72) Inventor: Ito, Hiroki, c/o Sony Corporation, Tokyo (JP); Naruse, Tetsuya, c/o Sony Corporation, Tokyo (JP)
(74) Representative: Nicholls, Michael John

(57) **Abstract**

A radio communication apparatus and a radio communication method are proposed. Communication can be established by switching, using communication switches 33 and 37, the first communication mode in which a first antenna unit 3 is operated with the first linear polarization characteristic while a second antenna unit 21 is operated with the second linear polarization characteristic, and the second communication mode in which the first antenna unit 3 and the second antenna unit 21 are operated with the circular polarization characteristic by supplying electric power to the first antenna unit 3 and the second antenna unit 21 by circular polarization generation means 34, 35, and 36 with the phase difference of about 90° to make the polarization to match with a ground base station and a satellite base station having different polarization at one terminal.

## Description

The present invention relates to a radio communication apparatus and a radio communication method, and more particularly, is suitably applied to, for example, a small portable radio.

Recently, a portable radio communicates not only with a ground base station, but also with a satellite base station, and the utilization varies with time in various systems and methods. Under the situation, in addition to communicating using voice, a portable radio can, for example, obtain measured position data by receiving and analyzing a satellite signal from a global positioning system (GPS) satellite, and detecting its current position according to the measured positional data.

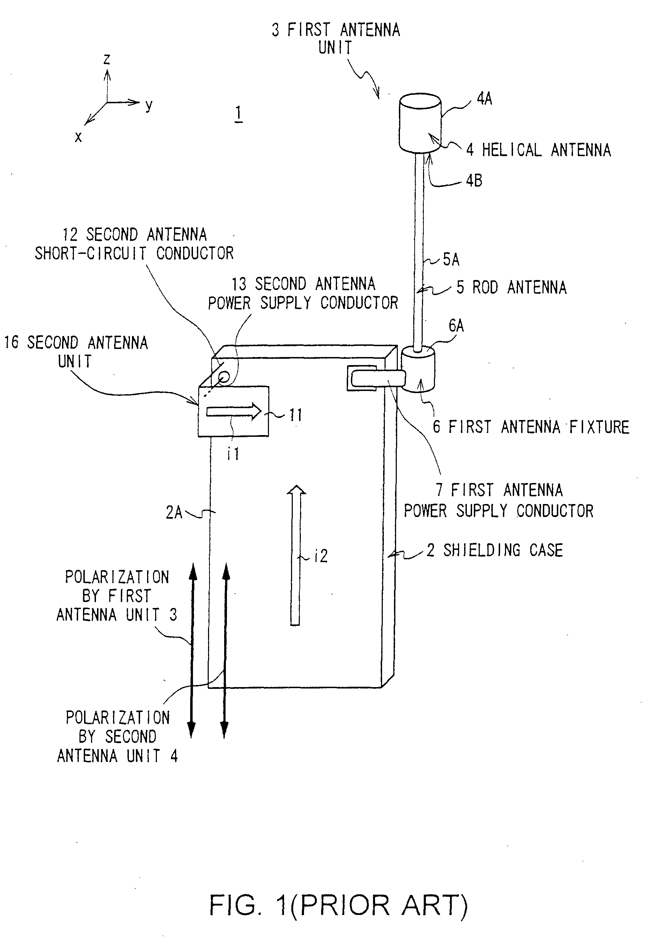

As shown in Fig. 1, a portable radio 1 as a terminal in a Personal Digital Cellular (PDC) digital portable telephone system comprises a circuit board (not shown) necessary for radio communication contained in a casing (not shown) made of a non-conductive material. The circuit board is covered with a shielding case 2 as a grounding member.

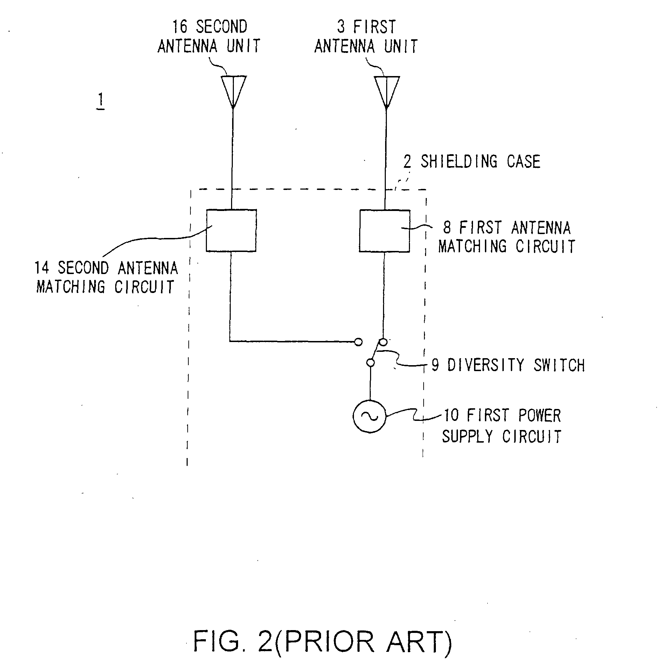

The portable radio 1, having the inside circuit board covered with the shielding case 2, prevents a first power supply circuit 10 mounted on the circuit board as shown in Fig. 2 and other various circuits from adversely affecting one another, a first antenna unit 3 for transmission and reception, a second antenna unit 16 for reception, or other equipment.

The first antenna unit 3 (Fig. 1) comprises a helical antenna 4 and a rod antenna 5. The rod antenna 5 is designed to slide along the z-axis inside and outside the casing.

The helical antenna 4 is formed by helically winding a conductive wire, and is covered with an antenna cover 4A made of a non-metallic material, thereby preventing its conductive portion from directly touching a human body portion.

In addition, the rod antenna 5 is made of a conductive wire, formed in a rod shape, and covered with a non-metallic antenna cover 5A, thereby preventing its conductive portion from directly touching a human body portion.

When the antenna is folded, the rod antenna 5 of the first antenna unit 3 slides along the inner circumference of a first antenna fixture 6 such that the antenna can be stored in the casing, and a bottom surface 4B of the helical antenna 4 can be held against a top surface 6A of the first antenna fixture 6.

When the antenna is extended, the rod antenna 5 of the first antenna unit 3 slides along the inner circumference of the first antenna fixture 6 such that the antenna can be pulled out of the casing, and the lower end (not shown) of the rod antenna 5 can be connected and held by the first antenna fixture 6.

The first antenna unit 3 is electrically connected to the circuit board covered with the shielding case 2 through the first antenna fixture 6 and a first antenna power supply conductor 7, and is connected to the first power supply circuit 10 through a first antenna matching circuit 8 and a diversity switch 9 mounted on the circuit board as shown in Fig. 2.

The first antenna matching circuit 8 matches the impedance of the first antenna unit 3 with the impedance of the first power supply circuit 10.

The second antenna unit 16 is an inverted F plate antenna in which a rectangular radiant conductor 11 having a length of the circumference of about 1/2 wavelength is placed little above and substantially parallel to a top surface 2A of the shielding case 2 through a spacer (not shown).

In the second antenna unit 16, one end of the radiant conductor 11 grounded to the shielding case 2 by a second antenna short-circuit conductor 12, and the radiant conductor 11 is electrically connected to a second antenna power supply conductor 13 at a predetermined position on the radiant conductor 11.

In the second antenna unit 16, the radiant conductor 11 is electrically connected to the circuit board covered with the shielding case 2 through the second antenna power supply conductor 13, and is further connected to the first power supply circuit 10 through a second antenna matching circuit 14 mounted on the circuit board, and the diversity switch 9 as shown in Fig. 2.

The second antenna matching circuit 14 matches the impedance on the second antenna unit 16 side with the impedance on the first power supply circuit 10 side.

The first power supply circuit 10 is adapted to generate a transmission signal in a signal format for communication-with a ground base station in transmission, supplies the signal to the first antenna unit 3 through the diversity switch 9, the first antenna matching circuit 8, the first antenna power supply conductor 7, and the first antenna fixture 6, and transmits it through the first antenna unit 3 as an electric wave of 1.5 GHz band to the ground base station.

The first power supply circuit 10 is adapted to cause the diversity switch 9 to select the first antenna unit 3 or the second antenna unit 16 whichever has a higher received power level in reception, thereby reducing the influence of fading.

Thus, when the first antenna unit 3 is selected by the diversity switch 9, the first power supply circuit 10 demodulates the signal received by the first antenna unit 3 from the ground base station after receiving it through the first antenna fixture 6, the first antenna power supply conductor 7, and the first antenna matching circuit 8.

On the other hand, when the second antenna unit 16 is selected by diversity switch 9, the first power supply circuit 10 demodulates the signal received by the second antenna unit 16 from the ground base station after receiving it through the second antenna power supply conductor 13 and the second antenna matching circuit 14.

At this time, the first antenna unit 3 functions as a vertical mode helical antenna for the z-axis direction linear polarization (vertical polarization) oscillating in the z-axis direction, but substantially undirectionally on the x-y plane whose ground is the shielding case 2 of the helical antenna 4 when the antenna is folded.

Furthermore, the first antenna unit 3 functions as a rod antenna for the z-axis direction linear polarization oscillating in the z-axis direction, but substantially undirectionally on the x-y plane whose ground is the shielding case 2 of the rod antenna 5 when the antenna is extended.

On the other hand, in the second antenna unit 16, an electric current i1 flows in the y-axis direction (horizontally) on the radiant conductor 11 to radiate an electric wave of y-axis direction linear polarization (horizontal polarization), and a leakage current i2, which is induced by the electric current i1 flowing on the radiant conductor 11 because the power supply point is close to the shielding case 2, flows in a large amount in the z-axis direction (vertically) on the shielding case 2 to radiate an electric wave of z-axis direction linear polarization (vertical polarization).

Thus, the second antenna unit 16 dominantly radiates the electric wave of z-axis direction linear polarization (vertical polarization) on the whole. As a result, it functions as an inverted F plate antenna for the z-axis direction vertical polarization, but substantially undirectional on the x-y plane whose ground is the shielding case 2.

However, the portable radio 1 with the above mentioned configuration is a terminal of a PDC system having a radio communication frequency of 1.5 GHz, and the radio communication frequency of the satellite signal transmitted from the GPS satellite is 1.5 GHz, so their radio communication frequencies match each other.

However, the satellite signal of the GPS satellite is transmitted with circular polarization obtained by combining the vertical polarization and the horizontal polarization, which are orthogonal to each other, with a 90° phase difference, and does not match in polarization the antenna characteristic of the z-axis direction linear polarization (vertical polarization) in the first antenna unit 3 and the second antenna unit 16.

Therefore, it has been very difficult that the portable radio 1 can receive a satellite signal of circular polarization from a base station of the GPS satellite with an acceptable gain because there is no perfect match of the polarization even if the radio communication frequency for communication with a ground base station matches the radio communication frequency for communication with a base station of the GPS satellite.

In view of the foregoing, an object of this invention is to provide a radio communication apparatus and a radio communication method with a simple configuration capable of obtaining an acceptable gain when communication are established between a ground base station and a satellite base station.

The foregoing object and other objects of the invention have been achieved by the provision of a radio communication apparatus and a radio communication method wherein communication can be accomplished by switching the first communication mode in which the first antenna unit is operated with the first linear polarization characteristic while the second antenna unit is operated with the second linear polarization characteristic, and the second communication mode in which the first antenna unit and the second antenna unit are operated with the circular polarization characteristic by supplying electric power to the first antenna unit and the second antenna unit by the circular polarization generation means with the phase difference of about 90° so as to make the polarization to match with two communication targets having different polarization characteristics at one terminal.

The nature, principle and utility of the invention will become more apparent from the following detailed description when read in conjunction with the accompanying drawings in which like parts are designated by like reference numerals or characters.

Embodiments of the invention will now be described, by way of example only, with reference to the accompanying drawings in which:
Fig. 1 is a schematic diagram showing the configuration of the conventional portable radio;
Fig. 2 is a schematic circuit diagram showing the circuitry near the antenna of the conventional portable radio;
Fig. 3 is a schematic diagram showing the configuration of a portable radio according to an embodiment of the present invention;
Fig. 4 is a schematic circuit diagram showing the circuitry near the antenna of the portable radio;
Fig. 5 is a schematic diagram for explaining the current components in the horizontal direction mutually intensified by the first and the second inverted F plate antennas;
Fig. 6 is a schematic diagram showing the radiation pattern of the first antenna unit;
Fig. 7 is a schematic diagram showing the radiation-directivity of the first and second antenna units; and
Fig. 8 is a schematic diagram showing the radiation pattern of the second antenna unit.

### (1) Configuration of a Portable Radio

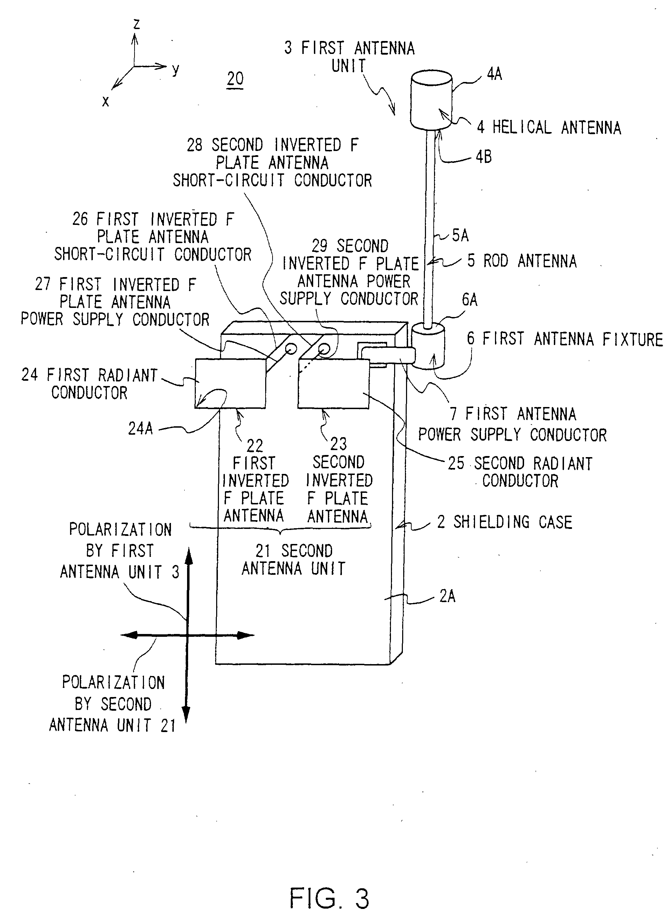

In Fig. 3 in which units corresponding to the units shown in Fig. 1 are assigned the same reference numerals, reference numeral 20 generally denotes a portable radio as a terminal in a Personal Digital Cellular (PDC) digital portable telephone system. A casing (not shown) made of a non-conductive material contains a circuit board (not shown) necessary for radio communication, and the circuit board is covered with a shielding case 2 as a grounding member.

The portable radio 20 having the inside circuit board covered with the shielding case 2, prevents various circuits mounted on the circuit board from adversely affecting one another, a first antenna unit 3, a second antenna unit 21, or other equipment.

The first antenna unit 3 comprises a helical antenna 4 and a rod antenna 5. The rod antenna 5 is designed to slide along the z-axis inside and outside the casing.

The helical antenna 4 is formed by helically winding a conductive wire, and is covered with an antenna cover 4A made of a non-metallic material, thereby preventing its conductive portion from directly touching a human body portion.

In addition, the rod antenna 5 is made of a conductive wire, formed in a rod shape, and covered with a non-metallic antenna cover 5A, thereby preventing its conductive portion from directly touching a human body portion.

When the antenna is folded, the rod antenna 5 of the first antenna unit 3 slides along the inner circumference of a first antenna fixture 6 such that the antenna can be stored in the casing, and a bottom surface 4B of the helical antenna 4 can be held against a top surface 6A of the first antenna fixture 6.

When the antenna is extended, the rod antenna 5 of the first antenna unit 3 slides along the inner circumference of the first antenna fixture 6 such that the antenna can be pulled out of the casing, and the lower end (not shown) of the rod antenna 5 can be connected and held by the first antenna fixture 6.

The first antenna unit 3 is electrically connected to the circuit board covered with the shielding case 2 through the first antenna fixture 6 and a first antenna power supply conductor 7.

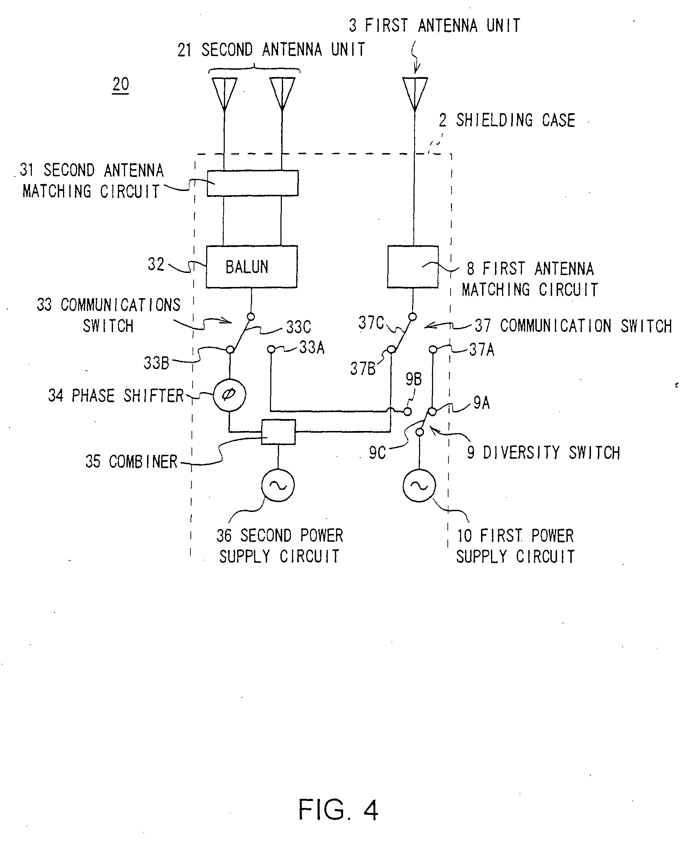

Furthermore, as shown in Fig. 4, the first antenna unit 3 is electrically connected to the first power supply circuit 10 through the first antenna matching circuit 8, a communication switch 37, and the diversity switch 9 mounted on a circuit board when communication are established with a ground base station. In this case, a switch terminal 37C is connected to a contact point 37A in the communication switch 37.

On the other hand, the first antenna unit 3 is electrically connected to a second power supply circuit 36 through the first antenna matching circuit 8 , and the communication switch 37 mounted on a circuit board when communication are established with a base station of a GPS satellite. In this case, the switch terminal 37C is connected to a contact point 37B in the communication switch 37.

The first antenna matching circuit 8 matches the impedance on the first antenna unit 3 side with the impedance on the first power supply circuit 10 side.

On the other hand, a second antenna unit 21 (Fig. 3) comprises a first inverted F plate antenna 22 and a second inverted F plate antenna 23.

Each of the first inverted F plate antenna 22 and the second inverted F plate antenna 23 comprises a first radiant conductor 24 and a second radiant conductor 25 of a rectangular shape each having a length of the circumference of about 1/2 wavelength little above and substantially parallel to a top surface 2A of the shielding case 2 through a spacer (not shown) and in the y-axis direction (horizontally).

The first inverted F plate antenna 22 is adapted to be resonant by setting the length of the circumference of the first radiant conductor 24 to the electric length of about 1/2 wavelength, and the upper right end of the first radiant conductor 24 is grounded to the shielding case 2 by a first inverted F plate antenna short-circuit conductor 26, and power is applied to the first radiant conductor 24 through a first inverted F plate antenna power supply conductor 27.

The first inverted F plate antenna power supply conductor 27 is attached at the optimum position such that the input impedance is matched with various circuits on the circuit board when power is supplied to the first radiant conductor 24.

An end point 24A on the first radiant conductor 24 farthest from the first inverted F plate antenna power supply conductor 27 has high impedance because a further current does not flow, and the short-circuit point of the first radiant conductor 24 connected to the first inverted F plate antenna power supply conductor 27 has low impedance of substantially 0 Ω.

Therefore, the first inverted F plate antenna 22 can be adjusted by moving the first inverted F plate antenna power supply conductor 27 between the positions of high impedance and low impedance to obtain the optimum input impedance.

On the other hand, in the second inverted F plate antenna 23, a second inverted F plate antenna short-circuit conductor 28 and a second inverted F plate antenna power supply conductor 29 are connected to the second radiant conductor 25 as the first inverted F plate antenna short-circuit conductor 26 and the first inverted F plate antenna power supply conductor 27 are connected to the first radiant conductor 24.

Thus, the second antenna unit 21 is provided such that the first inverted F plate antenna 22 and the second inverted F plate antenna 23 which have the same configurations and the same antenna characteristics can be symmetrical.

At this time, in the second antenna unit 21, the first radiant conductor 24 and the second radiant conductor 25 are electrically connected to a circuit board covered with the shielding case 2 through the first inverted F plate antenna power supply conductor 27 and the second inverted F plate antenna power supply conductor 29, and the second radiant conductor 25 is connected to the second power supply circuit 36 through a second antenna matching circuit 31, a balun (balanced-to-unbalanced transformer) 32, a communication switch 33, a phase shifter 34, and a combine 35 on the circuit board as shown in Fig. 4.

In addition, as shown in Fig. 4, the second antenna unit 21 is connected to the first power supply circuit 10 through the second antenna matching circuit 31, the balun 32, the communication switch 33, and the diversity switch 9 mounted on the circuit board when communication are established with a ground base station. In this case, in the communication switch 33, a switch terminal 33C is connected to a contact point 33A.

On the other hand, the second antenna unit 21 is connected to the second power supply circuit 36 through the second antenna matching circuit 31, the balun 32, the communication switch 33, the phase shifter 34, and the combiner 35 mounted on the circuit board when communication are established with a base station of a GPS satellite. In this case, in the communication switch 33, a switch terminal 33C is connected to a contact point 33B.

The second antenna matching circuit 31 matches the impedance on the second antenna unit 21 side with the impedance on the second power supply circuit 36 side.

The balun 32 prevents an unbalanced current from being caused by the difference in excitation state by performing a balanced to unbalanced converting process between the second antenna unit 21 which is operated as a balanced antenna and an unbalanced circuit at and after the communication switch 33 connected through an unbalanced transmission line when the first radiant conductor 24 and the second radiant conductor 25 in the second antenna unit 21 are operated as antennas. Power is applied to the first radiant conductor 24 and the second radiant conductor 25 with a phase difference of 180°.

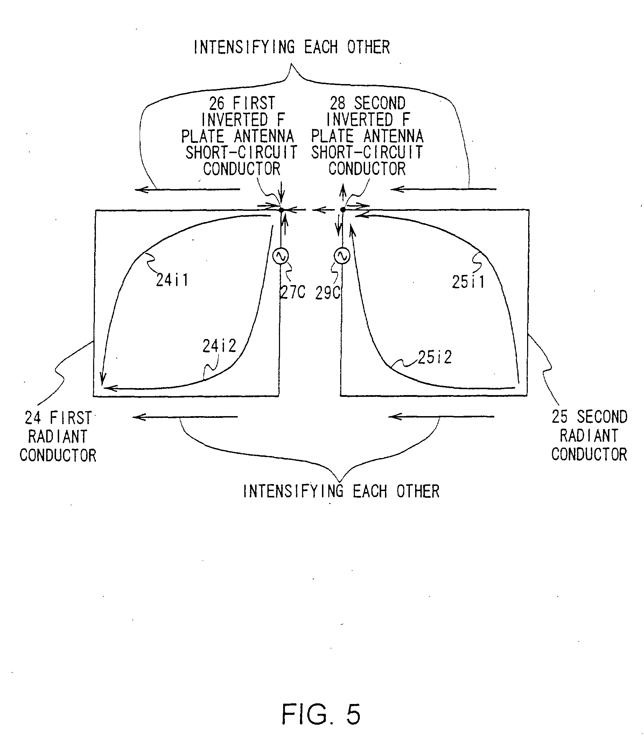

Practically, if power is applied to the first inverted F plate antenna power supply conductor 27 and the second inverted F plate antenna power supply conductor 29 with a phase difference of 180° in the second antenna unit 21 as shown in Fig. 5, then a current component 24i1 flowing through the first radiant conductor 24 and a current component 25i1 flowing through the second radiant conductor 25 intensify each other for a moment in the horizontal direction (y-axis direction), and a current component 24i2 flowing through the first radiant conductor 24 and a current component 25i2 flowing through the second radiant conductor 25 intensify each other for a moment in the horizontal direction (y-axis direction), thereby mutually intensifying the current components flowing through the two radiant conductors 24 and 25 only in the horizontal direction.

In the current components flowing through the first and second radiant conductors 24 and 25, the current components 24i2 and 25i1 nullify each other in the vertical direction (z-axis direction), and the current components 24i1 and 25i2 nullify each other in the vertical direction, thereby attenuating the current components in the vertical direction.

If the directions of the currents flowing through the first radiant conductor 24 and the second radiant conductor 25 are inverted in the second antenna unit 21 for the next moment, the current components flowing through the two radiant conductors 24 and 25 intensify each other only in the horizontal direction, which is inverse to the above mentioned case, thereby attenuating the current components in the vertical direction.

With the current flowing through the first radiant conductor 24 and the second radiant conductor 25, an induced current flows through the shielding case 2, which is a grounding conductor, through the first inverted F plate antenna short-circuit conductor 26 and the second inverted F plate antenna short-circuit conductor 28.

That is, since currents (current components 24i1 and 24i2) flow from the first inverted F plate antenna short-circuit conductor 26 to the first radiant conductor 24, an induced current flows to the first inverted F plate antenna short-circuit conductor 26 through the shielding case 2. Similarly, since currents (current components 25i1 and 25i2) flow to the second inverted F plate antenna short-circuit conductor 28 through the second radiant conductor 25, an induced current starts flowing from the second inverted F plate antenna short-circuit conductor 28 through the shielding case 2.

Thus, in the second antenna unit 21, the induced current flowing through the shielding case 2 mainly to the first inverted F plate antenna short-circuit conductor 26 and the second inverted F plate antenna short-circuit conductor 28 almost nullify each other, thereby preventing the leakage current i2 from flowing in the z-axis direction (vertical direction) through the shielding case 2 as in the second antenna unit 16 in the conventional portable radio 1 (shown in Fig. 1).

### (1-1) Communications with base station on ground

A portable radio 20 generates a transmission signal in a signal format for communication with a ground base station through the first power supply circuit 10 in transmitting data when communication are established with the ground base station, the power is applied to the first antenna unit 3 through the diversity switch 9, the first antenna matching circuit 8, the first antenna power supply conductor 7, and the first antenna fixture 6, and the signal is transmitted to the ground base station as an electric wave of 1.5 GHz band from the first antenna unit 3.

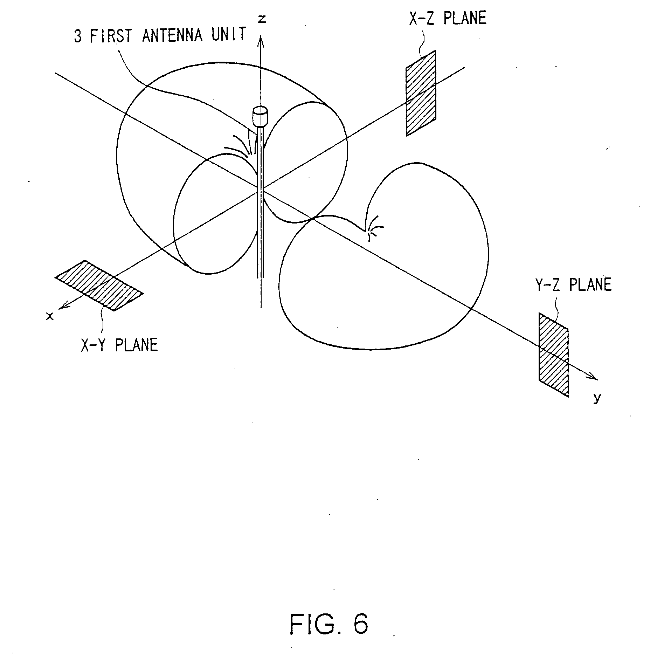

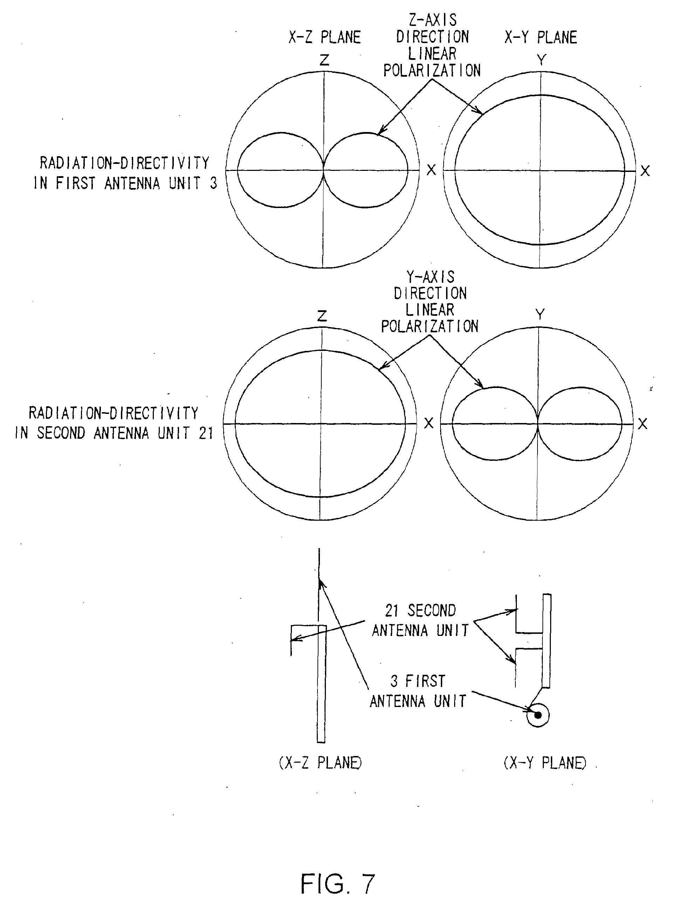

At this time, the first antenna unit 3 has radiation-directivity as shown in Figs. 6 and 7, functions as a vertical mode helical antenna for the z-axis direction vertical polarization substantially undirectional on the x-y plane whose ground is the shielding case 2 of the helical antenna 4 when the antenna is folded, and functions as a rod antenna for the z-axis direction linear polarization (vertical polarization) oscillating in the z-axis direction, but substantially undirectionally on the x-y plane whose ground is the shielding case 2 of the rod antenna 5 when the antenna is extended.

Therefore, the first antenna unit 3 has directivity of obtaining desired communication with a ground base station, and matches in polarization with the ground base station, thereby obtaining desired antenna characteristics.

The portable radio 20 connects the switch terminal 33C of the communication switch 33 to the contact point 33A when receiving data, connects the switch terminal 37C of the communication switch 37 to the contact point 37A, then compares the received power level in the first antenna unit 3 and the second antenna unit 21 by a control unit (not shown), switches a switch terminal 9C of the diversity switch 9 between connection points 9A and 9B based on the comparison result, selects the first antenna unit 3 or the second antenna unit 21 whichever has a higher received power level when receiving data, and reducing the influence of fading.

Practically, when the portable radio 20 selects the first antenna unit 3 using the diversity switch 9, it receives a base station signal from a ground base station received by the first antenna unit 3 using the first power supply circuit 10 through the first antenna fixture 6, the first antenna power supply conductor 7, the first antenna matching circuit 8, and the communication switch 37, and demodulates it using the first power supply circuit 10.

Similarly, when the portable radio 20 selects the second antenna unit 21 using the diversity switch 9, it receives a base station signal from a ground base station received by the second antenna unit 21 using the first power supply circuit 10 through the first inverted F plate antenna power supply conductor 27, the second inverted F plate antenna power supply conductor 29, the second antenna matching circuit 31, the balun 32, and the communication switch 33, and demodulates it using the first power supply circuit 10.

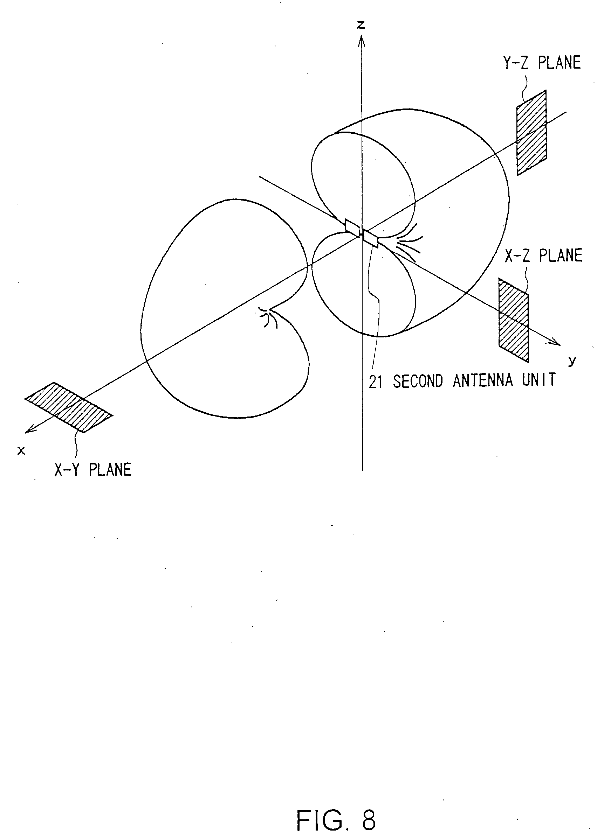

At this time, the second antenna unit 21 has radiation-directivity as shown in Figs. 7 and 8, and functions as a dipole antenna of y-axis direction linear polarization (horizontal polarization) oscillating in the y-axis direction, but substantially undirectional on the x-z plane.

Therefore, since the second antenna unit 21 is different from the first antenna unit 3 in directivity and polarization, it can perform a receiving process with an acceptable gain although an electric wave transmitted from a ground base station through a multi-path changes in reception direction and polarization.

### (1-2) Communications with base station of GPS satellite

When the portable radio 20 establishes communication with a base station of a GPS satellite, it connects the switch terminal 33C of the communication switch 33 to the contact point 33B, and connects the switch terminal 37C of the communication switch 37 to the contact point 37B.

When the portable radio 20 establishes communication with a base station of a GPS satellite, the portable radio 20 is not, for example, performing a communicating process through the ground base station, and a control unit periodically and automatically performs the communication.

In this status, the portable radio 20 transmits a satellite signal component from the GPS satellite received by the first antenna unit 3 to the combiner 35 through the first antenna matching circuit 8 and the communication switch 37, and transmits the satellite signal component from the GPS satellite received by the second antenna unit 21 to the combiner 35 through the second antenna matching circuit 31, the balun 32, the communication switch 37, and the phase shifter 34.

The phase shifter 34 transmits the satellite signal component received by the second antenna unit 21 to the combiner 35 with the phase of the components shifted by 90°. Practically, the phase shifter 34 adjusts and shifts the phase of the satellite signal component by 90° when the combiner 35 performs a combining process with a change of the phase by various factors such as the length of the line from the phase shifter 34 to the combiner 35,- etc. taken into account.

The combiner 35 combines the satellite signal component received by the first antenna unit 3 with the satellite signal component received by the second antenna unit 21 with a phase difference of about 90°, and transmits a resultant composed signal to the second power supply circuit 36. The second power supply circuit 36 computes the current position by demodulating the received composed signal and analyzing the demodulation result.

With an antenna characteristic of the first antenna unit 3 of the z-axis direction linear polarization (vertical polarization) undirectional on the x-y plane as shown in Figs. 6 and 7, and with an antenna characteristic of the second antenna unit 21 of the y-axis direction linear polarization (horizontal polarization) undirectional on the x-z plane as shown in Figs. 7 and 8, the polarization of the first antenna unit 3 is orthogonal to the polarization of the second antenna unit 21.

In this case, the portable radio 20 has no radiation-directivity in the y-axis direction as in the second antenna unit 21 as shown in Fig. 7 but has radiation-directivity in the x-axis direction as in the first antenna unit 3 and the second antenna unit 21. Therefore, it has the antenna characteristic of radiation-directivity in the x-axis direction.

With the x-axis direction of the portable radio 20, that is, the front or the back of a terminal, set toward the base station of the GPS satellite, the first antenna unit 3 has horizontal polarization to the ground, and the second antenna unit 21 keeps the horizontal polarization, but they remains orthogonal to each other.

Therefore, with the x-axis direction of the portable radio 20, that is, the front or the back of a terminal, set toward the base station of the GPS satellite, the first antenna unit 3 and the second antenna unit 21 can receive a satellite signal of circular polarization by dividing it into two polarization components orthogonal to each other.

Then, the portable radio 20 can receive a satellite signal of circular polarization transmitted from a base station of the GPS with an acceptable gain by the combiner 35 combining the satellite signal component received by the first antenna unit 3 with the satellite signal component received by the second antenna unit 21 with the phase shifted by 90° by the phase shifter 34.

### (2) Operation and Effect of Embodiment

With the above mentioned configuration, when the portable radio 20 establishes communication with a ground base station, it switches into the first communication mode by connecting the switch terminal 33C of the communication switch 33 to the contact point 33A and connecting the switch terminal 37C of the communication switch 37 to the contact point 37A, then switches the switch terminal 9A of the diversity switch 9 into the first antenna unit 3 or the second antenna unit 21 whichever is higher in received power level, thereby efficiently receiving a base station signal from the ground base station.

On the other hand, when the portable radio 20 receives a satellite signal from a GPS satellite, it switches into the second communication mode by connecting the switch terminal 33C of the communication switch 33 to the contact point 33B and connecting the switch terminal 37C of the communication switch 37 to the contact point 37B, then sets it in the x-axis direction, that is, sets the front or back of the terminal toward the base station of the GPS satellite, thereby matching in the directivity with the base station of the GPS satellite.

At this time, the portable radio 20 can receive a satellite signal of circular polarization transmitted from a GPS satellite with an acceptable gain by the z-axis direction linear polarization of the first antenna unit 3 and the y-axis direction linear polarization of the second antenna unit 21 with the z-axis direction linear polarization component of the satellite signal received by the first antenna unit 3 and the y-axis direction linear polarization component of the satellite signal received by the second antenna unit 21 composed with a phase difference of 90°.

Thus, the portable radio 20 switches the communication switches 33 and 37, and matches in directivity with a ground base station and a base station of a GPS satellite by changing the direction of the terminal, thereby appropriately using the first antenna unit 3 and the second antenna unit 21 between the ground base station and the base station of the GPS satellite. Thus, an acceptable gain can be obtained when radio communication are established between the ground base station and the base station of the GPS satellite.

With the above mentioned configuration, the portable radio 20 switches the communication switches 33 and 37 to match in polarization with a ground base station or of a GPS satellite, thereby appropriately selecting the first antenna unit 3 or the second antenna unit 21 to obtain an acceptable gain in communicating with the ground base station or of the GPS satellite.

### (3) Other Embodiments

In the above mentioned embodiments of the present invention, the second antenna unit 21 of the portable radio 20 as a radio communication apparatus comprises the first inverted F plate antenna 22 and the second inverted F plate antenna 23. However, the present invention is not limited to this application, but the second antenna unit 21 can be configured, as long as it has an antenna characteristic similar to that of the second antenna unit 21, by any antenna in various shapes such as first and second inverted L antennas, first and second helical antennas, etc. with a power supply point provided at a position at which two radiant conductors can be opposite and symmetric. With this configuration, the effects according to the above mentioned embodiments -can also be obtained.

According to the above mentioned embodiment, the second antenna unit 21 comprises the balun 32. However, the present invention is not limited to this application, but it is not always necessary to use a balun only if a balunce circuit can be connected to the second antenna unit 21 functioning as a balunce antenna.

Furthermore, according to the above mentioned embodiments, the second antenna unit 21 receives a satellite signal transmitted along circular polarization from a base station of a GPS satellite. However, the present invention is not limited to this application, but the second antenna unit 21 can receive a satellite signal from a satellite base station in various other communication systems.

According to the above mentioned embodiments of the present invention, the second antenna unit 21 receives a satellite signal transmitted along circular polarization from a base station of a GPS satellite. However, the present invention is not limited to this application, but a signal can be transmitted along circular polarization to a satellite base station in various other communication system.

In this case, using the second power supply circuit 36, the combiner 35, and the phase shifter 34 of circular polarization generation means, the power of the transmission signal provided from the second power supply circuit 36 can be distributed by the combiner 35, and applied to the first antenna unit 3 and the second antenna unit 21 with a phase difference of about 90° through the phase shifter 34. Thus, the antenna characteristics of the first antenna unit 3 and the second antenna unit 21 can be combined and converted into the circular polarization characteristic for transmission to a satellite base station.

Furthermore, according to the above mentioned embodiments of the present invention, the first communication mode and the second communication mode are switched by the communication switches 33 and 37 as communication switching means. However, the present invention is not limited to this application, but the first communication mode and the second communication mode can be switched using various other communication switching means capable of switching the modes by software, etc.

According to the above mentioned embodiments of the present invention, the control unit and the diversity switch 9 as diversity reception means switches into the first antenna unit 3 or the second antenna unit 21 whichever has a higher received power level. However, the present invention is not limited to this application, but the first antenna unit 3 and the second antenna unit 21 can be switched into each other by various other diversity reception means capable of switching the antennas by software, etc.

While there has been described in connection with the preferred embodiments of the invention, it will be obvious to those skilled in the art that various changes and modifications may be aimed, therefore, to cover in the appended claims all such changes and modifications as fall within the true spirit and scope of the invention.

## Claims

1. A radio communication apparatus, comprising:
a first antenna unit having a first linear polarization characteristic oscillating in a direction vertical to ground;
a second antenna unit having a second linear polarization characteristic oscillating in a direction orthogonal to the first linear polarization characteristic;
circular polarization generation means for converting a combination of antenna characteristics of said first antenna unit and said second antenna unit into a circular polarization characteristic by supplying electric power to said first antenna unit and said second antenna unit with a phase difference of approximately 90°; and
communication switching means for switching a first communication mode in which said first antenna unit is operated with the first linear polarization characteristic, and said second antenna unit is operated with the second linear polarization characteristic, and a second communication mode in which said circular polarization generation means operates said first antenna unit and said second antenna unit with the circular polarization characteristic.

2. The radio communication apparatus according to claim 1, further comprising:
diversity reception means for diversity-receiving a transmission signal from a ground base station by comparing a received power level of said first antenna unit with a received power level of said second antenna unit in the first communication mode, and selecting said first antenna unit or said second antenna unit whichever has a higher received power level.

3. The apparatus according to claim 1 or 2 wherein said second antenna unit is constituted by two inverted F plate antennas in which two radiant conductors substantially equal in shape and size horizontal to ground are provided at a predetermined interval on predetermined positions on a circuit board, and short-circuit points and power supply points are placed at positions symmetric to each other on opposing portions of said two radiant conductors.

4. The apparatus according to claim 1 or 2 wherein said second antenna unit is constituted by two inverted L antennas in which two radiant conductors substantially equal in shape and size horizontal to ground are provided at a predetermined interval on predetermined positions on a circuit board, and power supply points are placed at positions symmetric to each other on opposing portions of said two radiant conductors.

5. The apparatus according to claim 1 or 2 wherein said second antenna unit is constituted by two helical antennas in which two radiant conductors substantially equal in shape and size horizontal to ground are provided at a predetermined interval on predetermined positions on a circuit board, and power supply points are placed at positions symmetric to each other on opposing portions of said two radiant conductors.

6. The apparatus according to any preceding claim, wherein said first antenna unit is an extendable antenna, comprising a helical antenna which mainly operates in a folded state, and a rod antenna which mainly operates in an extended state.

7. The apparatus according to any one of claims 1 to 5, wherein said first antenna unit is a fixed antenna.

8. A radio communication method, comprising the steps of:
converting a combination of antenna characteristics of a first antenna unit and a second antenna unit into a circular polarization characteristic by supplying electric power to said first antenna unit and said second antenna unit with a phase difference of approximately 90°, wherein said first antenna unit has a first linear polarization characteristic oscillating in a direction vertical to ground; and said second antenna unit has a second linear polarization characteristic oscillating in a direction orthogonal to the first linear polarization characteristic; and
switching communication between a first communication mode in which said first antenna unit is operated with the first linear polarization characteristic, and said second antenna unit is operated with the second linear polarization characteristic, and a second communication mode in which said circular polarization generation means operates said first antenna unit and said second antenna unit with the circular polarization characteristic.

9. The method according to claim 8, further comprising the step of:
diversity-receiving a transmission signal from a ground base station by comparing a received power level of said first antenna unit with a received power level of said second antenna unit in the first communication mode, and selecting said first antenna unit or said second antenna unit whichever has a higher received power level.

10. The method according to claim 8 or 9 wherein said second antenna unit is constituted by two inverted F plate antennas in which two radiant conductors substantially equal in shape and size horizontal to the ground are provided at a predetermined interval on predetermined positions on a circuit board, and short-circuit points and power supply points are placed at positions symmetric to each other on opposing portions of said two radiant conductors.

11. The method according to claim 8 or 9 wherein said second antenna unit comprises two inverted L antennas in which two radiant conductors substantially equal in shape and size horizontal to the ground are provided at a predetermined interval on predetermined positions on a circuit board, and power supply points are placed at positions symmetric to each other on opposing portions of said two radiant conductors.

12. The method according to claim 8 or 9 wherein said second antenna unit is constituted by two helical antennas in which two radiant conductors substantially equal in shape and size horizontal to the ground are provided at a predetermined interval on predetermined positions on a circuit board, and power supply points are placed at positions symmetric to each other on opposing portions of said two radiant conductors.
